# EUROPEAN PATENT SPECIFICATION

(11) **EP 4 471 561 B1**
(45) Date of publication and mention of the grant of the patent: **28.10.2026**
(21) Application number: 23747026.5
(22) Date of filing: 26.01.2023
(51) Int. Cl.: G06F 3/0482, G06F 3/04847, G06F 3/0485, G06F 3/04883, G06F 3/0488, F24F 11/52, G08C 17/02

(54) **OPERATION TERMINAL DEVICE AND DISPLAY CONTROL METHOD FOR USER INTERFACE OF SAID OPERATION TERMINAL DEVICE**
BETRIEBSENDGERÄT UND ANZEIGESTEUERUNGSVERFAHREN FÜR EINE BENUTZERSCHNITTSTELLE DIESES BETRIEBSENDGERÄTS
DISPOSITIF TERMINAL D'EXPLOITATION ET PROCÉDÉ DE COMMANDE D'AFFICHAGE POUR INTERFACE UTILISATEUR DUDIT DISPOSITIF TERMINAL D'EXPLOITATION

(30) Priority: 27.01.2022 JP 2022011217
(43) Date of publication of application: 04.12.2024
(73) Proprietor: GENERAL Inc., Kawasaki-shi, Kanagawa 213-8502 (JP)
(72) Inventor: KAWAMURA, Yasuharu, Kawasaki-shi, Kanagawa 213-8502 (JP); NAKAMURA, Tomoko, Kawasaki-shi, Kanagawa 213-8502 (JP); OKITA, Katsumi, Kawasaki-shi, Kanagawa 213-8502 (JP)
(74) Representative: TBK
(86) International application number: PCT/JP2023/002413
(87) International publication number: WO 2023/145816

(56) References cited:
- WO-A1-2014/128784
- JP-A- 2010 205 280
- JP-A- 2011 107 783
- JP-A- 2013 242 849
- US-A1- 2014 319 232
- US-A1- 2017 184 322

## Description

### Technical Field

The present invention relates to an operation terminal device and a display control method for a user interface using the operation terminal device.

### Background Art

A remote controller serving as an operation terminal device is used to set an operation of an air conditioner. In recent years, a touch panel type remote controller has also appeared, and a graphical user interface (GUI), which provides a user with more intuitive operability than a conventional push button type remote controller, is increasingly being used. For example, when setting an operation mode of an air conditioner, selection elements (options) indicating various selectable operation modes such as cooling operation, heating operation, and dehumidification operation are displayed all at once on a screen, and the user selects a desired one from among the selection elements displayed all at once. In this case, the currently set operation mode is displayed on the screen in forms such as highlighting such that it can be visually distinguished from unselected operation modes (Patent Documents 1 and 2).

US 2014/319232 A1 discloses a method for performing interfacing with user of HVAC system controlled by thermostat using a smartphone, and involves wirelessly transmitting data representative of identified set-point temperature value after waiting a predetermined amount of time.

### Citation List

### Patent Literatures

Patent Document 1: JP 2021-55928 A
Patent Document 2: WO 2020/045249 A1

### Summary of Invention

### Technical Problem

In a case where all the selection elements are displayed on the screen at once, the user can immediately ascertain the selectable selection elements. On the other hand, with conventional forms such as highlighting, since selection elements that have been set and selection elements that have not been set are displayed all at once, it is not necessarily easy for the user to understand which selection element is currently set, and there is a concern that the currently set selection element may be misunderstood.

Accordingly, an object of the present invention is to provide an operation terminal device and a display control method for a user interface using the operation terminal device that can immediately ascertain selectable selection elements and can reliably understand the currently set selection element.

### Solution to Problem

The present invention for solving the above-mentioned problems includes the following invention specific matters and technical features.

The present invention according to claim 1 is an operation terminal device for a user to control a main body device. The operation terminal device includes a control unit and a user interface unit including a touch panel and controlled by the control unit.

The control unit has a display control function of displaying a setting screen of a plurality of setting screens on the touch panel and controlling the display such that the setting screen is switched to another setting screen in response to an operation of the user on the touch panel.

Further, the display control function includes a function of controlling such that, in a case where the setting screen is switched to the other setting screen, a selection element that is currently set among a plurality of selection elements provided on the other setting screen and selectable by the user is displayed for a predetermined time, and the other selection element is displayed in a selectable manner together with the selection element after the predetermined time has elapsed.

Furthermore, the present invention according to claim 7 is a display control method for a user interface using an operation terminal device equipped with a touch panel for a user to control a main body device.

The display control method includes: displaying a setting screen of a plurality of setting screens on the touch panel; displaying the setting screen to switch to another setting screen in response to an operation of the user on the touch panel on which the setting screen is displayed; displaying, in a case where the setting screen is switched to the other setting screen, only a selection element that is currently set among a plurality of selection elements disposed on the other setting screen and selectable by the user for a predetermined time; and displaying the other selection element in a selectable manner together with the selection element after the predetermined time has elapsed.

It is noted that in the present specification and the like, the term "means or unit" does not simply mean a physical means or element, but also includes the case where the function of the means or unit is implemented by software. Further, the function of one means or unit may be implemented by two or more physical means or elements, or the functions of two or more means or units may be implemented by one physical means or unit. Further, the "system" refers to a thing in which a plurality of devices (or function modules that implement a specific function) operates in cooperation with each other, and it does not matter whether or not each device or function module is in a single housing.

### Advantageous Effects of Invention

According to the present invention, it is an object of the present invention to provide an operation terminal device and a display control method for a user interface using the operation terminal device that can immediately ascertain selectable selection elements and can reliably understand the currently set selection element.

Other technical features, objects, effects, and advantages of the present invention will be made clear by the following embodiments described with reference to the accompanying drawings. The effects described in the present specification are merely examples and are not limiting, and other effects may also be present.

### Brief Description of Drawings

FIG. 1 is a block diagram illustrating an example of a configuration of an air conditioning system to which an operation terminal device according to an embodiment of the present invention is applied.
FIG. 2 is a block diagram illustrating an example of a functional configuration of an indoor unit in the air conditioning system to which the operation terminal device according to the embodiment of the present invention is applied.
FIG. 3 is a block diagram illustrating an example of a functional configuration of the operation terminal device according to the embodiment of the present invention.
FIG. 4 is a diagram illustrating an example of an external configuration of the operation terminal device according to the embodiment of the present invention.
FIG. 5 is a diagram illustrating an example of page transition of various setting screens displayed on a touch panel of the operation terminal device according to the embodiment of the present invention.
FIG. 6 is a diagram illustrating an example of a temperature setting screen displayed on the touch panel of the operation terminal device according to the embodiment of the present invention.
FIG. 7 is a diagram illustrating an example of an operation on an operation mode setting screen displayed on the touch panel of the operation terminal device according to the embodiment of the present invention;
FIG. 8A is a flowchart illustrating an example of processing of the operation terminal device according to the embodiment of the present invention.
FIG. 8B is a flowchart for describing details of setting screen switching processing illustrated in FIG. 8A.
FIGS. 9A and 9B are diagrams for describing an example of a change in a screen display on the touch panel of the operation terminal device according to the embodiment of the present invention.
FIGS. 10A and 10B are diagrams for describing an example of a change in a screen display on the touch panel of the operation terminal device according to the embodiment of the present invention.

### Description of Embodiments

Embodiments of the present invention will be described below with reference to the drawings. However, the embodiments described below are merely examples, and are not intended to exclude the application of various modifications or technologies not explicitly described below. The present invention can be implemented with various modifications (for example, by combining the embodiments and the like). Further, in the following description of the drawings, the same or similar parts are denoted by the same or similar reference numerals. The drawings are schematic and do not necessarily correspond to actual dimensions, ratios, or the like. The drawings may also include portions that differ in dimensional relationships and ratios.

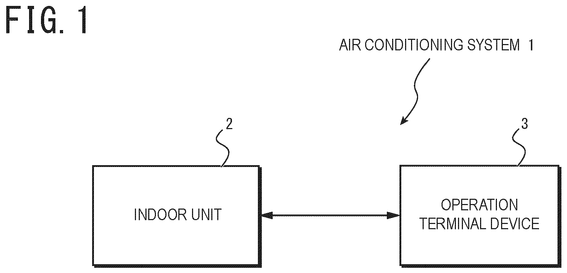

FIG. 1 is a block diagram illustrating an example of a configuration of an air conditioning system to which an operation terminal device according to an embodiment of the present invention is applied. As illustrated in this drawing, an air conditioning system 1 includes, for example, an indoor unit 2 of an air conditioner, and an operation terminal device 3 that allows a user to remotely operate the indoor unit 2. Although not illustrated, the air conditioning system 1 includes an outdoor unit connected to the indoor unit 2 by electrical wiring and refrigerant piping.

The indoor unit 2 is arranged, for example, indoors, and serves as a part of the air conditioning system 1 that conditions indoor air. The indoor unit 2 includes a heat exchanger and a fan, and performs heating, cooling, dehumidification, and the like in a room by performing heat exchange between a refrigerant and indoor air in a heat exchanger to adjust the temperature and humidity to appropriate temperature and humidity and sending out the conditioned air to the room using the fan. The indoor unit 2 is a main body device in relation to the operation terminal device 3.

The operation terminal device 3 is a user interface device for a user to remotely operate the indoor unit 2, and is also referred to as a remote controller (so-called "remote control"). In the present disclosure, the operation terminal device 3 is assumed to be a stationary type or a wall-mounted type, but is not limited thereto, and may be a handheld type.

The indoor unit 2 and the operation terminal device 3 are connected, for example, by wireless communication, but are not limited thereto, and may be connected by wired communication. As an example of wireless communication, the indoor unit 2 and the operation terminal device 3 are connected by infrared communication. Alternatively, the indoor unit 2 and the operation terminal device 3 are connected by wireless communication technology conforming to the bluetooth low energy (BLE) standard, for example. On the other hand, in the case of wired communication, the connection may be made using an I/F such as a universal synchronous receiver/transmitter (UART). The operation terminal device 3 transmits a control command to the indoor unit 2 in accordance with the input operation by the user. The indoor unit 2 receives the control command and operates in accordance with the control command.

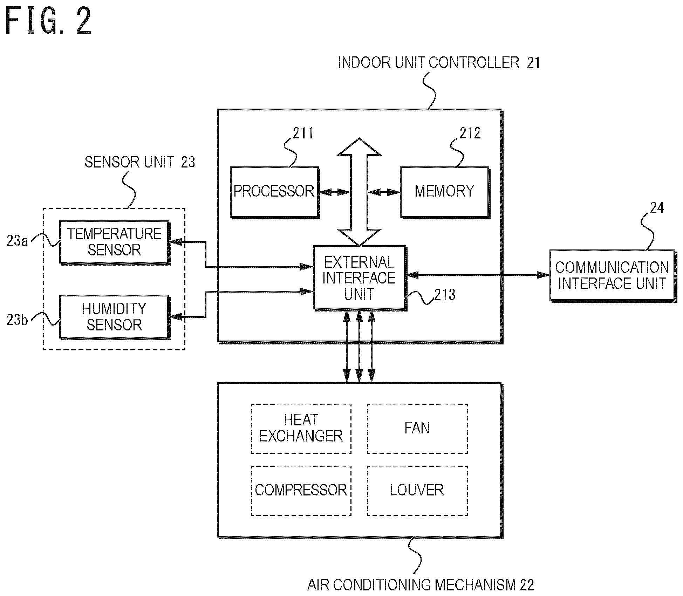

FIG. 2 is a block diagram illustrating an example of a functional configuration of the indoor unit in the air conditioning system according to the embodiment of the present invention. As illustrated in this drawing, the indoor unit 2 includes, for example, an indoor unit controller 21, an air conditioning mechanism 22, a sensor unit 23, and a communication interface unit 24.

The indoor unit controller 21 includes a processor (microcomputer) 211, a memory 212, an external interface unit 213, and the like for controlling an operation of the indoor unit 2. The memory 212 stores, for example, an embedded control program, various setting data, and the like. The indoor unit controller 21 controls the indoor unit 2 to switch operation modes (e.g., cooling operation, heating operation, dehumidification operation, or the like) under an operation of the operation terminal device 3 by a user, for example. The external interface unit 213 is an interface circuit that connects the indoor unit controller 21, the air conditioning mechanism 22, the sensor unit 23, and an external device (e.g., the operation terminal device 3).

The air conditioning mechanism 22 is a heat exchanger, a compressor, a fan, a louver, or the like of the indoor unit 2. The air conditioning mechanism 22 receives control from the indoor unit controller 21, and the indoor unit 2 cooperates with the outdoor unit to perform heat exchange between the refrigerant and the indoor air in the heat exchanger, and blows out the conditioned air into the room.

The sensor unit 23 is an element that detects various physical quantities of the room in which the indoor unit 2 is installed. The sensor unit 23 includes, for example, various environmental sensors. In the drawing, a temperature sensor 23a and a humidity sensor 23b are illustrated.

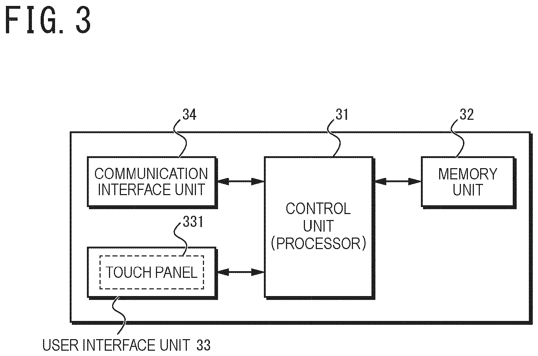

The communication interface unit 24 is a communication interface for achieving wireless communication with a communication interface unit 34 (see FIG. 3) of the operation terminal device 3. For example, in a case where the indoor unit 2 and the operation terminal device 3 are connected to each other by infrared communication, the communication interface unit 24 includes a light receiving unit (not illustrated) that receives an infrared signal.

FIG. 3 is a block diagram illustrating an example of a functional configuration of the operation terminal device in the air conditioning system according to the embodiment of the present invention. As illustrated in this drawing, the operation terminal device 3 includes, for example, a control unit 31, a memory unit 32, a user interface unit 33, and a communication interface unit 34.

The control unit 31 controls the operation terminal device 3. The control unit 31 includes, for example, a processor. Furthermore, the memory unit 32 is a memory module necessary for the operation of the control unit 31, and stores, for example, a control program, various setting data, or the like. The control unit 31 executes a control program under the control of the processor and cooperates with the memory unit 32, the user interface unit 33, and the communication interface unit 34 to cause the operation terminal device 3 to implement various functions. In the present disclosure, the control unit 31 has a display control function of displaying a setting screen of a plurality of setting screens on a touch panel 331 and controlling the display such that the setting screen is switched to another setting screen in response to an operation of the user on the touch panel 331. As will be described below, the display control function has a function of displaying, for example, a drum roll image on the user interface unit 33 and displaying a selection element in the drum roll image with a presentation effect that can visually distinguish the selection element from other selection elements.

The user interface unit 33 provides intuitive operations to the user under the control of the control unit 31. In the present disclosure, the user interface unit 33 includes a touch panel 331. The touch panel 331 is an input/output device including a display unit and a position input unit. The user interface unit 33 detects a position where the user touches the image displayed on the display unit of the touch panel 331 with a finger or the like, and outputs the detected position as an input signal to the control unit 31. The control unit 31 executes predetermined processing on the basis of the input signal.

The communication interface unit 34 is a communication interface for achieving wireless communication with the communication interface unit 24 of the indoor unit 2. For example, in a case where the indoor unit 2 and the operation terminal device 3 are connected to each other by infrared communication, the communication interface unit 34 includes a light emitting unit (not illustrated) that emits an infrared signal.

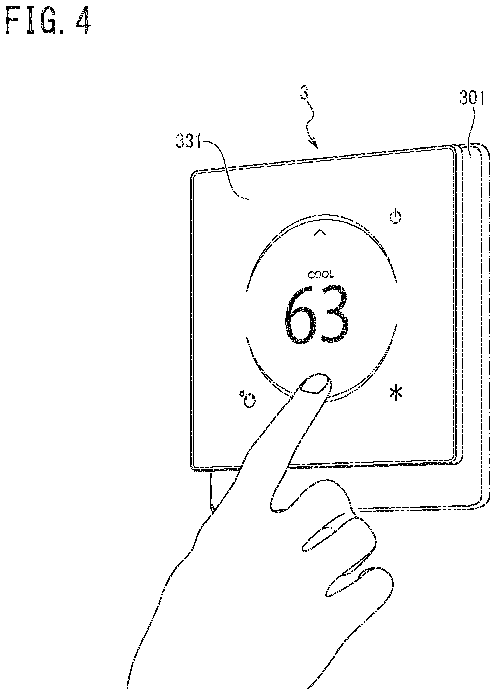

FIG. 4 is a diagram illustrating an example of an external configuration of the operation terminal device according to the embodiment of the present invention. As illustrated in the drawing, a housing 301 is made of a resin material such as ABS, and gives the appearance of the operation terminal device 3. In the present embodiment, the housing 301 has a thin rectangular parallelepiped shape, and the touch panel 331 of the user interface unit 33 is provided on the front surface. Various GUI screens are displayed on the touch panel 331 under the control of the control unit 31.

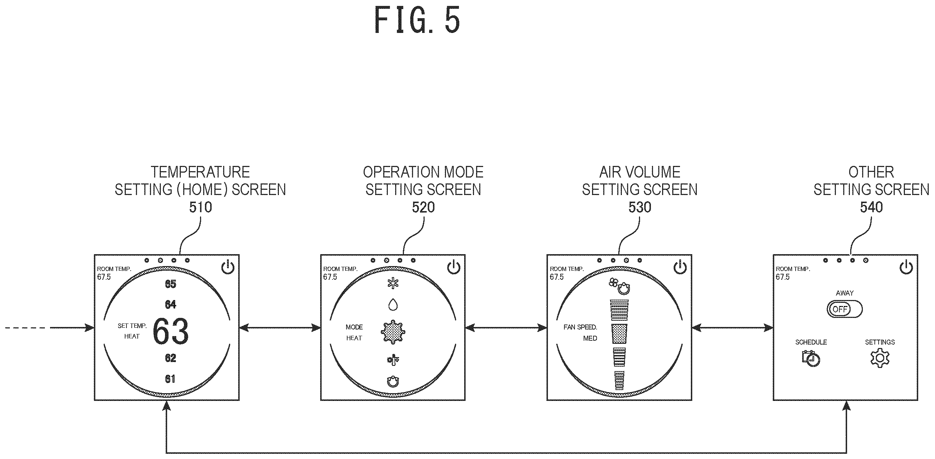

FIG. 5 is a diagram illustrating an example of page transition of various setting screens displayed on the touch panel of the operation terminal device according to the embodiment of the present invention. In this drawing, four setting screens are illustrated, namely, a temperature setting screen 510 for setting a temperature of a surrounding environment to be conditioned by the indoor unit 2, an operation mode setting screen 520 for setting an operation mode such as cooling, heating, and dehumidification, an air volume setting screen 530 for setting an air volume blown out from the indoor unit 2, and an other setting screen 540 for performing various settings such as other schedule settings.

As illustrated in this drawing, these four setting screens 510 to 540 are displayed on the touch panel 331, for example, in a scroll display, that is, in a display format in which each setting screen transitions in a loop as illustrated by arrows in the drawing. For example, in a sleep mode in which the display screen is not displayed (lights out) under the control of the control unit 31, in a case where a touch operation of the user on the touch panel 331 is detected, the operation terminal device 3 displays a startup screen (not illustrated) on the touch panel 331, and then displays the temperature setting screen 510, which is a home screen, on the touch panel 331. Subsequently, in a case where the user slides or flicks his or her finger in the left direction on the touch panel 331, the operation terminal device 3 performs the screen transition such that the screen slides in the horizontal direction in accordance with the movement of the finger, and controls the temperature setting screen 510 on the touch panel to switch to the operation mode setting screen 520. In this way, the user can sequentially switch the setting screens by performing a sliding operation in the left-right direction (such as a swipe operation or a flick operation) on the touch panel 331.

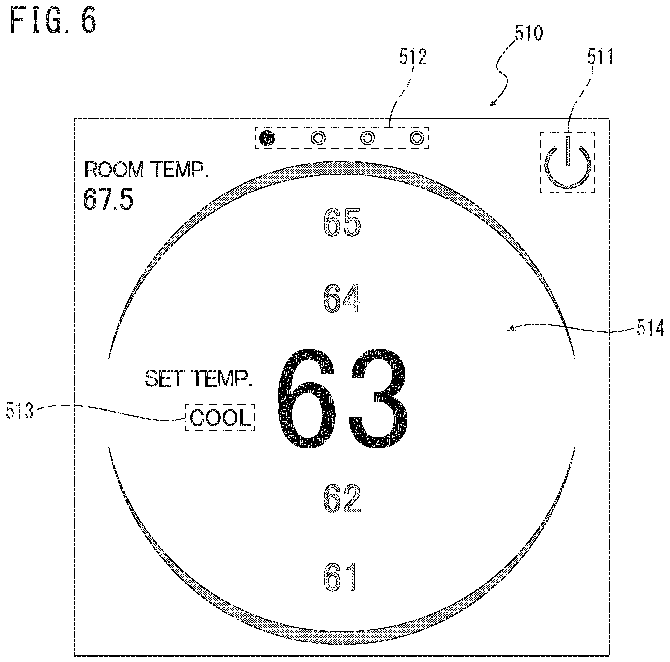

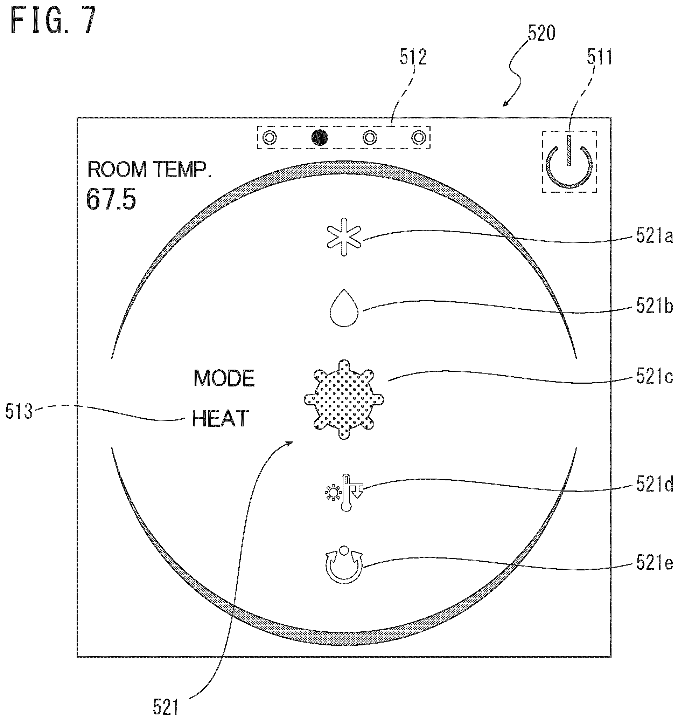

FIGS. 6 and 7 are diagrams illustrating examples of a screen displayed on the touch panel of the operation terminal device according to the embodiment of the present invention, and specifically, FIG. 6 is a diagram illustrating an example of a temperature setting screen displayed on the touch panel 331, and FIG. 7 is a diagram illustrating an example of an operation mode setting screen.

As illustrated in FIG. **6****,** the temperature setting screen 510 includes a power switch icon 511 indicating a power switch, a page icon 512 indicating a page of a setting screen being displayed, an operation mode icon 513 indicating a current operation mode, and a temperature setting icon 514 indicating a current setting temperature and for selecting a temperature to be set. Note that some icons have the same layout on other setting screens from the viewpoint of usability and the like. In this example, the temperature setting icon 514 is laid out in a circular display area at the center of the temperature setting screen 510.

In the present disclosure, the temperature setting icon 504 in the temperature setting screen 510 is a so-called drum roll type GUI. The user operates the temperature setting icon 504 to set the temperature of the surrounding environment. That is, the temperature setting icon 504 in the temperature setting screen 510 is an image (drum roll image) that displays a drum roll in which a plurality of selection elements (in this example, numbers indicating the Fahrenheit temperature) indicating selectable setting temperatures is disposed in a simulated manner. The control unit 31 controls the drum roll image to change like an animation. The front position of the drum roll (the center position of the temperature setting screen 510) is a position (selected position) for determining the setting temperature, and also indicates the current setting temperature. In this example, the number indicating the current setting temperature at the selected position is enlarged and displayed larger than other numbers, thereby improving visibility.

Further, as illustrated in FIG. **7****,** the operation mode setting screen 520 includes a power switch icon 511 indicating a power switch, a page icon 512 indicating a page of a setting screen being displayed, an operation mode icon 513 indicating various operation modes and a current operation mode, and an operation mode setting icon 521. Similarly, the user can give an instruction to the operation terminal device 3 by performing various operations on predetermined icons in the operation mode setting screen 520.

The operation mode setting icon 521 in the operation mode setting screen 520 is also a so-called drum roll type GUI. The operation modes include, for example, a cooling operation mode, a dehumidification operation mode, a heating operation mode, an anti-freezing operation mode, and an automatic operation mode, which are respectively indicated by icons 521a to 521e in the drawing. In this example, the icon 521c is displayed with a presentation effect that makes it visually distinguish from the other icons 521a, 521b, 521d, and 521e, and indicates that the current setting is the heating operation mode. For example, the brightness of the selection element located at the selected position is set to 100%, and the selection element further away from the selected position is displayed with lower brightness (darker). Such visually distinguished presentation effects include highlighting elements that the user wants to recognize (in this case, increasing the brightness of the selection element and decreasing the brightness of other elements, and the like).

In the present disclosure, when the user performs a sliding operation in the left-right direction (such as a swipe operation or a flick operation) on the various setting screens 510 to 540, the control unit 31 switches the display on the touch panel 331 from one setting screen to another setting screen. In this case, the control unit 31 controls the screen to transition such that the screen slides in the horizontal direction, for example. Further, as will be described below, on a setting screen where the screen transitions such that the screen slides in the horizontal direction, the control unit 31 displays one selection element that is currently set among a plurality of selection elements that is selectable by the user with a visually distinguishable presentation effect for a predetermined time (for example, 1 second), and after the predetermined time has elapsed, terminates the presentation effect of the one selection element and controls the other selection elements to be displayed in the same manner as the one selection element and to be selectable. As an example, the other selection elements that are not currently set are operations displayed after the display of the one selection element that is currently set and the like.

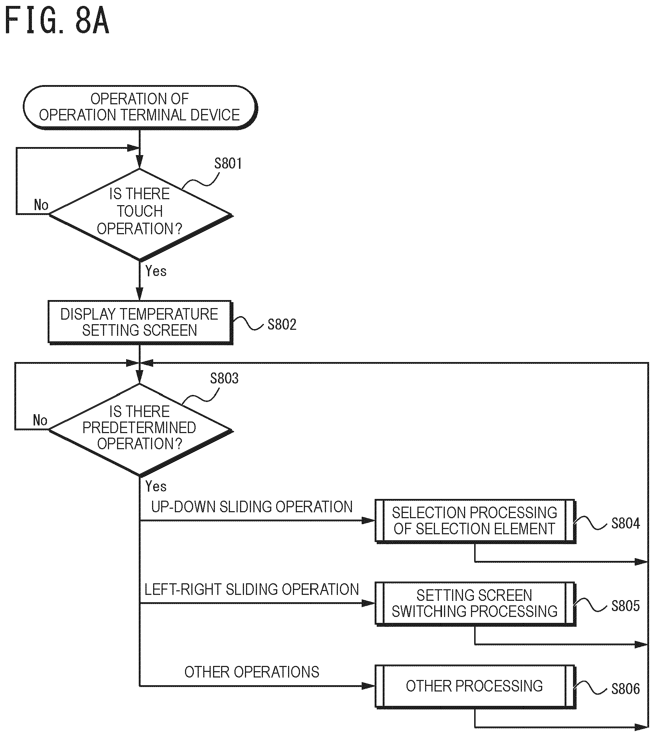

FIG. 8A is a flowchart illustrating an example of processing of the operation terminal device according to the embodiment of the present invention. Such processing is a display control method for a user interface implemented by the processor of the control unit 31 executing a control program.

As illustrated in this drawing, the operation terminal device 3 monitors whether or not the touch panel 331 is operated by the user while operating in the sleep mode, for example (S801). The user's operation here is, for example, a touch operation on the touch panel 331.

In a case where the operation terminal device 3 determines that some kind of user operation has been performed on the touch panel 331 (Yes in S801), the operation terminal device 3 performs control such that the temperature setting screen 510, such as that illustrated in FIG. 6, is displayed as a home screen on the touch panel 331 (S802). In a case where there is no user operation on the touch panel 331 (No in S801), the process returns to determining whether or not there has been an operation (S801). Subsequently, the operation terminal device 3 monitors whether or not the user has performed a predetermined operation on the temperature setting screen 510 of the touch panel 331 (S803). For example, the operation terminal device 3 monitors whether or not there is a sliding operation in the left-right direction (a drum roll operation), a sliding operation in the up-down direction (a page switching operation), and other operations (a tap operation on a specific icon, and the like) on the temperature setting screen 510.

In a case where the operation terminal device 3 determines that there is some kind of operation on the temperature setting screen 510 (Yes in S803) and that there is a sliding operation in the up or down direction, the operation terminal device 3 changes the display such that the drum roll rotates in accordance with the sliding operation, and selects the selection element located at the selected position as the setting content (S804). For example, the operation terminal device 3 starts timing at a point in time at which the drum roll stops, and sets the selection element located at the selected position as the setting content in a case where a predetermined time has elapsed (not illustrated). Timing is performed by, for example, a drum roll display control function. Accordingly, the operation terminal device 3 issues a control command and transmits the control command to the indoor unit 2 to cause the indoor unit 2 to execute processing according to the selected setting content.

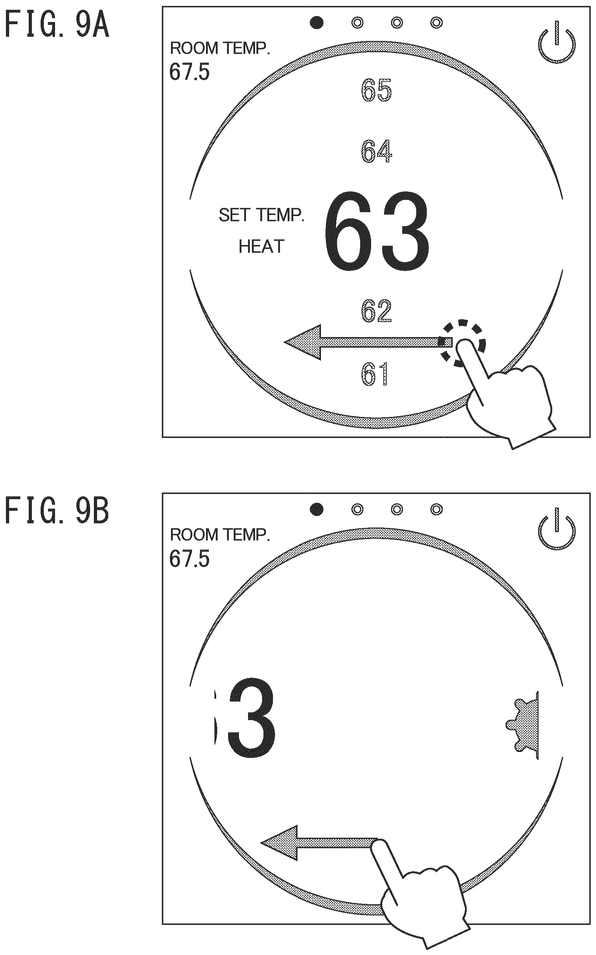

Further, in a case where the operation terminal device 3 determines that there is some kind of operation on the temperature setting screen 510 (Yes in S803) and that there is a sliding operation in the left or right direction, the operation terminal device 3 performs processing for switching to a setting screen corresponding to the previous or next page (S805). For example, as illustrated in FIG. 9A, in a case where the user performs a sliding operation in, for example, the left direction on the temperature setting screen 510, the operation terminal device 3 scroll-displays a circular display area at the center of the screen as illustrated in FIG. 9B to switch to the operation mode setting screen 520.

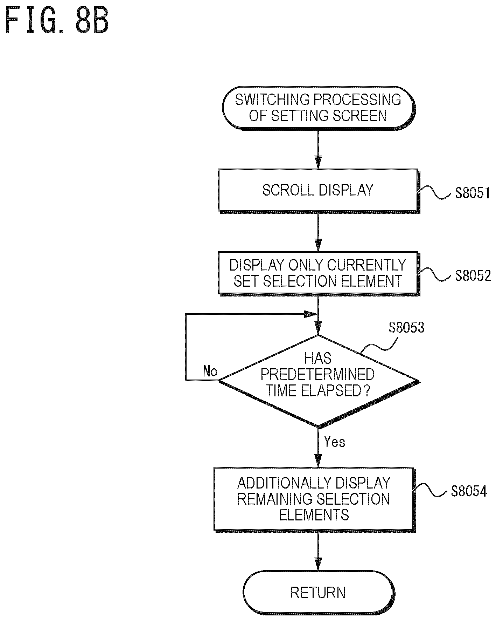

FIG. 8B is a flowchart for describing details of the setting screen switching processing of S805 illustrated in FIG. 8A. As illustrated in FIG. 8B, in a case where the page switching occurs, the operation terminal device 3 performs control such that the circular display area at the center of the current setting screen is scrolldisplayed (S8051).

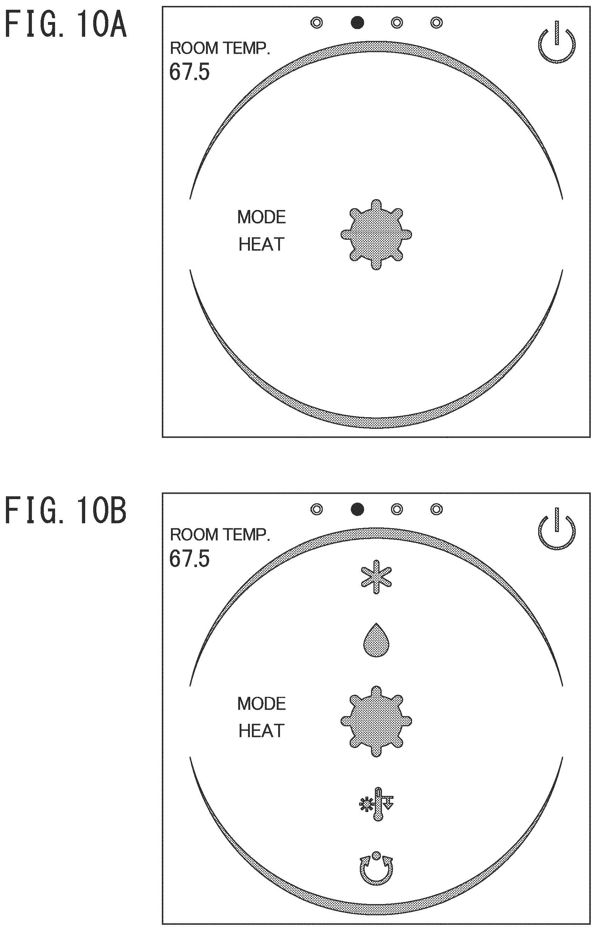

Subsequently, the operation terminal device 3 performs control such that only the currently set selection element is displayed on the setting screen of the switching destination by ending the scroll display (S8052). For example, in a case where the current operation mode is the heating operation mode, as illustrated in FIG. 10A, only the icon 521c indicating the heating operation mode is displayed as the currently set selection element on the operation mode setting screen 520. At this time, in order to indicate that the page has switched due to the end of the scroll display, the operation terminal device 3 applies the page icon 512 in which the circle is blacked out and highlighted in the display of the circle in the drawing (so-called indicator display) with respect to the adjacent circle in the scroll direction.

The operation terminal device 3 displays only the currently set selection element, and then determines whether or not a predetermined time has elapsed (S8053). The predetermined time is, for example, about 1 second, but is not limited thereto, and need only be a length at which a specific selection element can be visually recognized. The operation terminal device 3 stops displaying the screen until a predetermined time has elapsed (No in S8053).

Alternatively or additionally, the operation terminal device 3 may apply a presentation effect that is visually distinguished from the currently set selection element. The presentation effect that is visually distinguished indicates that the selection element selected by the user is highlighted in a manner that is easy for the user to recognize, and examples thereof include displays such as a color (displaying a color scheme different from the surroundings), a highlight (highlighting with a marker), a blink (blinking display), a bold (highlighting with bold font), an italic (slanted display of characters and the like), and an underline (display of underlining added to characters, etc.) etc. In a case where the operation terminal device 3 determines that a predetermined time (for example, 1 second) has elapsed (Yes in S8053), the operation terminal device 3 controls the display to change from FIG. 10A and FIG. 10B, that is, such that the remaining selection elements are additionally displayed with a time delay (S8054). Further, in this case, the operation terminal device 3 may control the display such that the brightness of the selection element located at the selected position is set to 100%, and the selection element further away from the selected position is displayed with lower brightness. Thereby, the selection element located at the selected position is further visually distinguished from the other selection elements, so that the user can reliably ascertain the currently set selection element.

In this way, the user can select a desired operation mode by performing a sliding operation in the up-down direction. Further, the user can switch to another setting screen by performing, for example, a sliding operation in the left-right direction on the operation mode setting screen 520.

Referring back to FIG. 8A, in a case where the operation terminal device 3 determines that there is some kind of operation on the temperature setting screen 510 (Yes in S803) and that there is some other operation (for example, a touch operation, and the like), the operation terminal device 3 executes processing according to the operation (S806). For example, in a case where the tap operation is performed on the power icon 511, the operation terminal device 3 transmits a control command for turning off the power of the indoor unit 2, and transitions to a sleep mode.

As described above, according to the present embodiment, in a case where the setting screen is switched, the operation terminal device 3 controls to display only the currently set selection element on the setting screen of the switching destination, and to additionally display the remaining selection elements with a time delay after a predetermined period of time has elapsed. Accordingly, the user can immediately ascertain the current setting content on the setting screen of the switching destination.

Note that in the above description, switching from the temperature setting screen 510 to the operation mode setting screen 520 was described as an example, but the present disclosure is not limited thereto, and for example, the switching from the operation mode setting screen 520 to the temperature setting screen 510 may be performed. That is, in a case where the switching operation from the operation mode setting screen 520 to the temperature setting screen 510 is performed, the operation terminal device 30 controls the temperature setting screen 510 such that only the selection element indicating the currently set temperature is displayed, and selection elements indicating other temperatures are displayed with a time delay after a predetermined time has elapsed.

Each of the embodiments described above is an illustration for explaining the present invention, and the present invention is not intended to be limited only to these embodiments.

For example, in any method disclosed in the present specification, steps, actions or functions may be performed in parallel or in a different order unless the results are consistent. The steps, operations, and functions described above are provided as mere examples, and some of the steps, operations, and functions may be omitted, or may be combined into a single unit, or other steps, operations, or functions may be added.

In addition, although various embodiments are disclosed in the present specification, specific technical matters in one embodiment can be added to other embodiments or replaced with specific technical matters in other embodiments, with appropriate improvements.

### Reference Signs List

- 1: air conditioning system
- 2: indoor unit
- 21: indoor unit controller
- 211: processor
- 212: memory
- 213: external interface unit
- 22: air conditioning mechanism
- 23: sensor unit
- 23a: temperature sensor
- 23b: humidity sensor
- 24: communication interface unit
- 3: operation terminal device
- 31: control unit
- 32: memory unit
- 33: user interface unit
- 331: touch panel
- 34: communication interface unit
- 301: housing

## Claims

1. An operation terminal device (3) for a user tc control a main body device (2), the operation terminal device comprising:
a control unit (31); and
a user interface unit (33) including a touch panel (331) and controlled by the control unit,
wherein the control unit has a display control function of displaying a setting screen of a plurality of setting screens (510, 520, 530, 540) on the touch panel and controlling the display such that the setting screen is switched to another setting screen in response to an operation of the user on the touch panel, and
**characterized in that**
the display control function includes a function of controlling such that, in a case where the setting screen is switched to the other setting screen, a selection element that is currently set among a plurality of selection elements provided on the other setting screen and selectable by the user is displayed for a predetermined time, and the other selection element is displayed in a selectable manner together with the selection element after the predetermined time has elapsed.

2. The operation terminal device according to claim 1,
wherein the display control function includes a function of controlling such that only the selection element is displayed on the other setting screen for the predetermined time, and the other selection element is displayed after the predetermined time has elapsed.

3. The operation terminal device according to claim 1 or **2,**
wherein the display control function includes a function of controlling switching from the setting screen to the other setting screen by a scroll display.

4. The operation terminal device according to any one of claims 1 to 3,
wherein the other setting screen includes a drum roll image in which the plurality of selection elements is arranged, and is a drum roll type GUI in which the drum roll image changes such that a drum roll rotates in response to a sliding operation of the user on the touch panel.

5. The operation terminal device according to any one of claims 1 to 4,
wherein the display control function controls a selection element that is currently set to be displayed for the predetermined time with a presentation effect that is visually distinguished from the other selection element.

6. The operation terminal device according to claim 5,
wherein the presentation effect that is visually distinguished includes at least one of a color, a highlight, a blink, a bold, an italic, and an underline.

7. A display control method for a user interface using an operation terminal device equipped with a touch panel for a user to control a main body device, the display control method comprising:
displaying (S802) a setting screen of a plurality of setting screens on the touch panel;
displaying (S805) the setting screen to switch to another setting screen in response to an operation (S8051) of the user on the touch panel on which the setting screen is displayed;
**characterized in that** the method further comprises:
displaying (S8052), in a case where the setting screen is switched to the other setting screen, only a selection element that is currently set among a plurality of selection elements disposed on the other setting screen and selectable by the user for a predetermined time; and
displaying (S8054) the other selection element in a selectable manner together with the selection element after the predetermined time has elapsed.

## Patentansprüche

1. Bedienungsendgerät (3), für einen Benutzer, um ein Hauptkörpergerät (2) zu steuern, wobei das Bedienungsendgerät umfasst:
eine Steuereinheit (31); und
eine Benutzerschnittstelleneinheit (33), die ein Berührungsfeld (331) aufweist und von der Steuereinheit gesteuert ist,
wobei die Steuereinheit eine Anzeigesteuerungsfunktion eines Anzeigens eines Einstellungsbildschirms aus einer Vielzahl von Einstellungsbildschirmen (510, 520, 530, 540) auf dem Berührungsfeld und eines Steuerns der Anzeige, so dass der Einstellungsbildschirm als Reaktion auf eine Bedienung des Benutzers auf dem Berührungsfeld zu einem anderen Einstellungsbildschirm umgeschaltet wird, hat, und
**dadurch gekennzeichnet, dass**
die Anzeigesteuerungsfunktion eine Funktion eines Steuerns aufweist, so dass, in einem Fall, in dem der Einstellungsbildschirm zu dem anderen Einstellungsbildschirm umgeschaltet wird, ein Auswahlelement, das aktuell unter einer Vielzahl von auf dem anderen Einstellungsbildschirm bereitgestellten und durch den Benutzer auswählbaren Auswahlelementen eingestellt ist, für eine vorbestimmte Zeit angezeigt ist, und das andere Auswahlelement zusammen mit dem Auswahlelement in einer auswählbaren Weise angezeigt ist, nachdem die vorbestimmte Zeit verstrichen ist.

2. Bedienungsendgerät nach Anspruch 1,
wobei die Anzeigesteuerungsfunktion eine Funktion eines Steuerns aufweist, so dass nur das Auswahlelement auf dem anderen Einstellungsbildschirm für die vorbestimmte Zeit angezeigt ist und das andere Auswahlelement angezeigt ist, nachdem die vorbestimmte Zeit verstrichen ist.

3. Bedienungsendgerät nach Anspruch 1 oder 2,
wobei die Anzeigesteuerungsfunktion eine Funktion eines Steuerns des Umschaltens von dem Einstellungsbildschirm zu dem anderen Einstellungsbildschirm mittels einer Bildlaufanzeige aufweist.

4. Bedienungsendgerät nach einem der Ansprüche 1 bis 3,
wobei der andere Einstellungsbildschirm ein Drehrad-Bild aufweist, in dem die Vielzahl von Auswahlelementen angeordnet ist, und eine GUI vom Drehrad-Typ ist, in der sich das Drehrad-Bild derart verändert, dass sich ein Drehrad als Reaktion auf eine Schiebebetätigung des Benutzers auf dem Berührungsfeld dreht.

5. Bedienungsendgerät nach einem der Ansprüche 1 bis 4,
wobei die Anzeigesteuerungsfunktion ein Auswahlelement steuert, das aktuell eingestellt ist, um für die vorbestimmte Zeit mit einem Darstellungseffekt angezeigt zu werden, der sich visuell von dem anderen Auswahlelement unterscheidet.

6. Bedienungsendgerät nach Anspruch 5,
wobei der Darstellungseffekt, der sich visuell unterscheidet, mindestens eines aus einer Farbe, einer Hervorhebung, einem Blinken, einer Fettschrift, einer Kursivschrift und einer Unterstreichung aufweist.

7. Anzeigesteuerungsverfahren für eine Benutzerschnittstelle unter Verwendung eines mit einem Berührungsfeld ausgestatteten Bedienungsendgeräts für einen Benutzer, um ein Hauptkörpergerät zu steuern, wobei das Anzeigesteuerungsverfahren umfasst:
Anzeigen (S802) eines Einstellungsbildschirms aus einer Vielzahl von Einstellungsbildschirmen auf dem Berührungsfeld;
Anzeigen (S805) des Einstellungsbildschirms, um als Reaktion auf eine Bedienung (S8051) des Benutzers auf dem Berührungsfeld, auf dem der Einstellungsbildschirm angezeigt ist, zu einem anderen Einstellungsbildschirm umzuschalten;
**dadurch gekennzeichnet, dass** das Verfahren ferner umfasst:
Anzeigen (S8052), in einem Fall, in dem der Einstellungsbildschirm zu dem anderen Einstellungsbildschirm umgeschaltet ist, nur eines Auswahlelements, das aktuell unter einer Vielzahl von auf dem anderen Einstellungsbildschirm angeordneten Auswahlelementen eingestellt ist und das durch den Benutzer für eine vorbestimmte Zeit auswählbar ist; und
Anzeigen (S8054) des anderen Auswahlelements in einer auswählbaren Weise zusammen mit dem Auswahlelement, nachdem die vorbestimmte Zeit verstrichen ist.

## Revendications

1. Dispositif terminal d'opération (3) pour un utilisateur pour commander un dispositif de corps principal (2), le dispositif terminal d'opération comprenant :
une unité de commande (31) ; et
une unité d'interface utilisateur (33) comportant un panneau tactile (331) et commandée par l'unité de commande,
dans lequel l'unité de commande a une fonction de commande d'affichage d'afficher un écran de réglage parmi une pluralité d'écrans de réglage (510, 520, 530, 540) sur le panneau tactile et de commander l'affichage de telle sorte que l'écran de réglage est basculé à un autre écran de réglage en réponse à une opération de l'utilisateur sur le panneau tactile, et
**caractérisé en ce que**
la fonction de commande d'affichage comporte une fonction de contrôler de telle sorte que, dans un cas où l'écran de réglage est basculé à l'autre écran de réglage, un élément de sélection qui est actuellement réglé parmi une pluralité d'éléments de sélection prévus sur l'autre écran de réglage et sélectionnables par l'utilisateur est affiché pendant une période prédéterminée, et l'autre élément de sélection est affiché d'une manière sélectionnable ensemble avec l'élément de sélection après que la période prédéterminée s'est écoulée.

2. Dispositif terminal d'opération selon la revendication 1,
dans lequel la fonction de commande d'affichage comporte une fonction de commander de telle sorte que seulement l'élément de sélection est affiché sur l'autre écran de réglage pendant la période prédéterminée, et que l'autre élément de sélection est affiché après que la période prédéterminée s'est écoulée.

3. Dispositif terminal d'opération selon la revendication 1 ou 2,
dans lequel la fonction de commande d'affichage comporte une fonction de commander un basculement de l'écran de réglage à l'autre écran de réglage par un affichage à défilement.

4. Dispositif terminal d'opération selon une quelconque des revendications 1 à 3,
dans lequel l'autre écran de réglage comporte une image de roue de sélection dans laquelle la pluralité d'éléments de sélection est disposée, et est une IUG de type roue de sélection dans laquelle l'image de roue de sélection change de telle sorte qu'une roue de sélection tourne en réponse à une opération de glissement de l'utilisateur sur le panneau tactile.

5. Dispositif terminal d'opération selon une quelconque des revendications 1 à 4,
dans lequel la fonction de commande d'affichage commande un élément de sélection qui est actuellement réglé pour être affiché pendant la période prédéterminée avec un effet de présentation qui est distingué visuellement de l'autre élément de sélection.

6. Dispositif terminal d'opération selon la revendication 5,
dans lequel l'effet de présentation qui est distingué visuellement comporte au moins un parmi une couleur, une mise en évidence, un clignotement, une mise en gras, une mise en italique et un soulignement.

7. Procédé de commande d'affichage pour une interface utilisateur en utilisant un dispositif terminal d'opération équipé d'un panneau tactile pour un utilisateur pour commander un dispositif de corps principal, le procédé de commande d'affichage comprenant :
afficher (S802) un écran de réglage parmi une pluralité d'écrans de réglage sur le panneau tactile ;
afficher (S805) l'écran de réglage pour basculer à un autre écran de réglage en réponse à une opération (S8051) de l'utilisateur sur le panneau tactile sur lequel l'écran de réglage est affiché ;
**caractérisée en ce que** le procédé comprend en outre :
afficher (S8052), dans un cas où l'écran de réglage est basculé à l'autre écran de réglage, seulement un élément de sélection qui est actuellement réglé parmi une pluralité d'éléments de sélection disposés sur l'autre écran de réglage et qui est sélectionnable par l'utilisateur pendant une période prédéterminée ; et
afficher (S8054) l'autre élément de sélection d'une manière sélectionnable ensemble avec l'élément de sélection, après que la période prédéterminée s'est écoulée.
